# FASCICULE DE BREVET EUROPEEN

(11) **EP 3 167 122 B1**
(45) Date de publication et mention de la délivrance du brevet: **03.08.2022**
(21) Numéro de dépôt: 15734707.1
(22) Date de dépôt: 10.07.2015
(51) Int. Cl.: E01C 7/24, E01C 7/32, E01C 7/18, C08L 95/00, C08K 3/22

(54) **LAIT DE COMPOSE CALCO-MAGNÉSIEN POUR MATÉRIAU ROUTIER BITUMINEUX**
AUFSCHLÄMMUNG AUS CALCIUM/MAGNESIUMVERBINDUNG FÜR BITUMINÖSES STRASSENMATERIAL
CALCIUM/MAGNESIUM COMPOUND SLURRY FOR BITUMINOUS ROAD MATERIAL

(30) Priorité: 10.07.2014 FR 1456653; 10.07.2014 BE 201400527
(43) Date de publication de la demande: 17.05.2017
(73) Titulaire: Eurovia SA, 92000 Nanterre (FR); Lhoist Recherche et Développement S.A., 1342 Ottignies-Louvain-la-Neuve (BE)
(72) Inventeur: DELFOSSE, Frédéric, F-33600 Pessac (FR); DROUADAINE, Ivan, F-33160 Saint Medard en Jalles (FR); LAURENT, Bernard, B-5170 Lustin (BE); LESUEUR, Didier, 38140 LA MURETTE (FR)
(74) Mandataire: Regimbeau
(86) Numéro de dépôt international: PCT/EP2015/065893
(87) Numéro de publication internationale: WO 2016/005591

(56) Documents cités:
- WO-A1-94/10247
- WO-A1-98/51614
- WO-A1-03/002820
- WO-A1-2014/064234
- US-A- 2 399 411
- BAYOMY FOUAD M: "Development and analysis of cement-coated aggregates for asphalt mixtures", ASTM SPECIAL TECHNICAL PUBLICATION, PHILADELPHIA, PA, US, no. 1147, 12 octobre 1992 (1992-10-12), pages 19-34, XP002108078, ISSN: 0066-0558

## Description

La présente invention concerne un nouvel agent pour réguler la rupture des émulsions de bitumes. Ces émulsions de bitumes sont utilisées dans la fabrication de matériaux routiers bitumineux, pouvant être obtenus par enrobage ou par répandage.

Les émulsions de bitume présentent le grand avantage de pouvoir être utilisées à des températures inférieures à 100 °C. L'émulsion est un vecteur permettant d'apporter le bitume, qui doit être stable au stockage avant son emploi mais dont on cherche à en obtenir la rupture lorsqu'elle est appliquée. La rupture s'entend ici comme le passage d'un état initial où le bitume est dispersé sous forme de fines gouttelettes dans une phase aqueuse (émulsion) vers un état final où le bitume constitue un film continu pouvant par exemple enrober des granulats. Dans ce cas, au contact de cette fraction minérale, l'émulsion se rompt, l'eau se sépare du bitume puis s'élimine par drainage et/ou évaporation. Il reste alors un liant bitumineux plus ou moins rigide, souvent appelé "liant résiduel" pour mentionner qu'il provient de la rupture d'une émulsion.

Les émulsions de bitume utilisées dans les travaux routiers doivent satisfaire à un certain nombre de conditions se rapportant notamment à leur vitesse de rupture.

Les émulsions routières de bitume sont des émulsions comprenant du bitume émulsifié dans une phase aqueuse. Dans la pratique, les émulsions sont des émulsions cationiques. Les émulsifiants les plus courants sont des composés organiques issus de la classe des amines, pâteux ou liquides à température ambiante. Les émulsifiants étant insolubles dans l'eau, on ajoute une quantité suffisante d'un acide minéral ou organique afin d'ioniser les fonctions amines des émulsifiants pour permettre leur dissolution dans l'eau. Ce mélange émulsifiant-eau-acide est appelé phase aqueuse. Dans certains cas, il peut également être avantageux d'utiliser conjointement un tensio-actif amphotérique.

Pour faciliter et contrôler la rupture de l'émulsion, on utilise un agent de rupture. Cet agent de rupture est ajouté à la fraction minérale solide, lorsqu'elle est présente. Cet additif est en règle générale du ciment ou de la chaux hydratée. Cette dernière, également appelée chaux éteinte, est constituée majoritairement de di-hydroxyde de calcium et est obtenue par calcination de roche calcaire (carbonate de calcium) permettant la formation de chaux vive (oxyde de calcium), qui est ensuite hydratée pour obtenir la chaux hydratée. Elle se présente sous forme pulvérulente (sèche) ou en suspension dans l'eau (lait de chaux).

Dans le cadre du développement des matériaux routiers bitumineux, la régulation du pH du milieu est ressortie comme un point clef de la formulation car elle dépend de nombreux facteurs : choix des émulsifiants, nature de l'acide dans la phase aqueuse, nature des granulats, origine du bitume... Dans certains cas, la régulation du pH du milieu est primordiale.

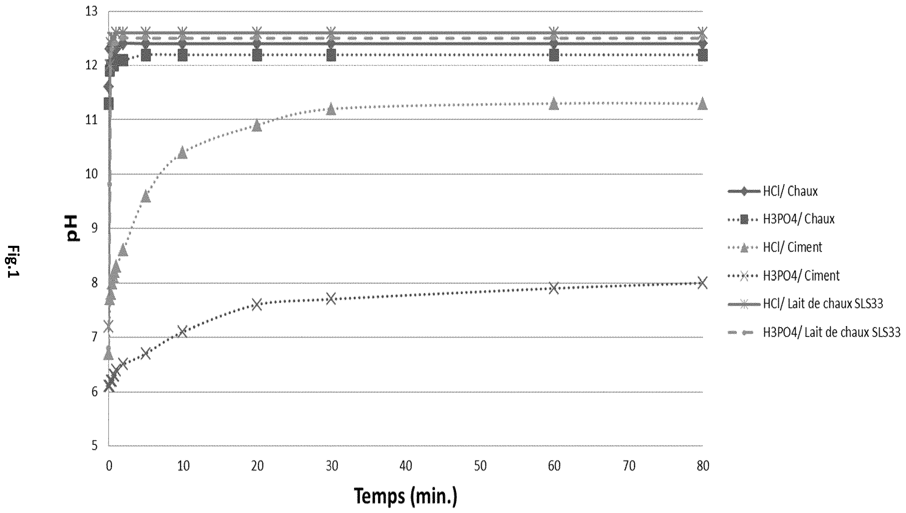

L'invention sera plus particulièrement exemplifiée par les matériaux bitumineux coulés à froid (MBCF). Pour des bitumes naphténiques, l'utilisation de chaux ou de ciment avec de l'acide chlorhydrique impose un pH basique de l'ordre de 11-13, au plateau après stabilisation, quelle que soit la nature des granulats (voir figure 1). Ces conditions de pH s'avèrent être favorables pour obtenir une cinétique de rupture appropriée vis-à-vis de l'application. Par contre, pour des bitumes paraffiniques, l'obtention d'un matériau bitumineux coulé à froid avec une montée en cohésion adaptée est très difficile. On a décrit l'utilisation d'émulsifiants particuliers permettant d'utiliser des bitumes paraffiniques (demande n°FR14/51144, non encore publiée). Dans cette demande, les MBCF sont formulés avec un acide spécifique (acide phosphorique ou acide polyphosphorique) et en ajoutant du ciment à la fraction minérale solide. On a constaté que l'utilisation de lait de chaux calcique ne permet pas de répondre aux spécifications des MBCF à base de bitume paraffinique : temps de maniabilité, temps de rupture... Or, en pratique, l'utilisation du ciment, qui est un additif pulvérulent, pose des contraintes de manipulation. wo9410247 décrit un rupteur d'émulsion de bitume à base de solide en émulsion dans une huile. Le solide peut comprendre un ciment, de l'hydroxyde de calcium ou du carbonate/ hydroxyde de magnésium

On reste donc à la recherche d'un agent permettant de contrôler la rupture d'une émulsion de bitume. Pour les matériaux routiers obtenus par enrobage, cet additif doit permettre de réguler la cinétique de remontée de pH lors du mélange de l'émulsion de bitume avec la fraction minérale solide et assurer le temps de maniabilité, assurer ensuite la qualité de rupture de l'émulsion, et améliorer les propriétés d'adhésivité et de cohésion.

De manière surprenante, les inventeurs ont constaté que certains laits calco-magnésiens, peuvent être utilisés pour contrôler la rupture des émulsions de bitume.

L'invention a donc pour objets :
▪ L'utilisation d'une suspension aqueuse de particules solides d'un composé calco-magnésien de formule (A)

   nCa(OH)₂.mCaCO₃.aMgO.bMg(OH)₂.cMgCO₃.I

   dans laquelle
   n, m, a, b et c représentent des coefficients molaires pour le composé calco-magnésien en suspension dans la phase aqueuse tels que
      - n+m = x représente la proportion de phase calcique présente dans le composé calco-magnésien et où 0 < x ≤ 1
      - a+b+c = y représente la proportion de phase magnésienne présente dans le composé calco-magnésien et où 0 < y ≤ 1
      - x/y représente le rapport phase calcique sur phase magnésienne
   I représente l'ensemble des divers composés additionnels
   en tant qu'agent de régulation de rupture d'une émulsion cationique de bitume.
▪ des matériaux routiers bitumineux obtenus par mélange d'une fraction minérale solide et d'une émulsion de bitume en présence de cet agent de régulation de rupture de l'émulsion. Les matériaux routiers bitumineux peuvent par exemple être des MBCF, des enrobés à l'émulsion, des graves émulsions, des bétons bitumineux à l'émulsion
▪ un procédé d'obtention d'une couche d'accrochage par répandage d'une émulsion cationique de bitume, comprenant une étape d'application de cet agent de régulation de rupture de l'émulsion.

Dans ce qui suit, l'agent de régulation de rupture de l'émulsion pourra également être appelé, par simplification, agent de rupture ou rupteur.

Ces nouveaux agents de rupture sont d'excellentes alternatives au ciment. Ils permettent d'élargir la gamme de pH auquel le formulateur de matériaux routiers bitumineux peut travailler et ainsi ils lui apportent une grande flexibilité pour le choix des types de granulats, de la composition émulsifiante, de l'acide présent dans la phase aqueuse et du bitume (naphténique ou parrafinique) en fonction de son cahier des charges. L'emploi de ces agents dans des matériaux routiers bitumineux, en particulier obtenus par enrobage, permet de tamponner la remontée de pH des granulats, ce qui laisse plus de flexibilité pour la formulation de l'émulsion de bitume (choix de la composition émulsifiante, de l'acide). Il est en effet possible de réguler par exemple la maniabilité du mélange granulats/émulsion en jouant sur la remontée de pH.

Le lait de composé calco-magnésien est utilisé pour contrôler la remontée de pH. En effet, il va jouer le rôle de tampon et ainsi lors de son mélange avec les autres constituants, il va permettre une cinétique progressive de la remontée de pH. Les courbes de remontées de pH se caractérisent par un plateau au pH cible. Avantageusement, on recherche également à ralentir la remontée de pH.

L'utilisation des laits de composés calco-magnésien ne porte pas préjudices aux autres propriétés mécaniques recherchées, en particulier l'adhésion, la maniabilité. Le composé calco-magnésien de formule (A) selon l'invention peut être formulé sous forme d'une suspension, ce qui permet d'éviter la manipulation de poudres.

L'invention a pour objet l'utilisation d'une suspension aqueuse de particules solides d'un composé calco-magnésien de formule (A) : nCa(OH)₂.mCaCO₃.aMgO.bMg(OH)₂.cMgCO₃.I, dans laquelle
n, m, a et b représentent des coefficients molaires pour le composé calco-magnésien en suspension dans la phase aqueuse tels que
   - n+m = x représente la proportion de phase calcique présente dans le composé calco-magnésien et où 0 < x ≤ 1
   - a+b+c = y représente la proportion de phase magnésienne présente dans le composé calco-magnésien et où 0 < y ≤ 1
   - x/y représente le rapport phase calcique sur phase magnésienne
I représente l'ensemble des divers composés additionnels
en tant qu'agent de régulation de rupture d'une émulsion cationique de bitume.

Dans une variante particulière de l'invention, le composé calco-magnésien est de formule (AA) :
xCa(OH)₂.aMgO.bMg(OH)₂.D, dans laquelle
x, a et b représentent des coefficients molaires tels que
   - a+b = y représente la proportion de phase magnésienne présente dans le composé calco-magnésien et où 0 < y ≤ 1
   - x =n, représente la proportion de phase calcique présente dans le composé calco-magnésien et où 0 ≤ x <1
   - x/y représente le rapport phase calcique sur phase magnésienne D représente l'ensemble des divers composés additionnels.

Dans le cadre de l'invention, on dénommera également « laits calco-magnésiens » les suspensions aqueuses de particules solides d'un composé calco-magnésien tel que défini.

### Agent de rupture.

L'agent de rupture est au moins une suspension aqueuse comprenant des particules solides d'un composé calco-magnésien de formule (A), tel que (AA).

Les valeurs des fractions molaires sont définies pour le composé calco-magnésien, avant suspension dans la phase aqueuse.

### composé calco-magnésien :

Dans une forme de réalisation particulière de la présente invention, n est inférieur à 0,7, de préférence inférieur à 0,6 ou encore inférieur à 0,5. Ainsi, de manière préférentielle, le coefficient n varie entre 0,01 et 0,7, ou avantageusement de 0,02 à 0,6 ou plus avantageusement encore entre 0,03 à 0,5.Dans une autre forme de réalisation particulière de la présente invention, x/y est compris entre 0,7 et 1,3, plus particulièrement x/y est autour de 1. Par « autour de 1 » on désigne 1 ± 0,1.

Dans une autre forme de réalisation particulière de la présente invention, pour le composé de formule (AA), x/y est compris entre 0,8 et 1,2, plus particulièrement x/y est autour de 1. Par « autour de 1 » on désigne 1 ± 0,1.

Dans une autre forme de réalisation particulière de la présente invention, le coefficient molaire a vaut 0. Pour le composé (AA), x/y correspond alors au rapport x/b.

Dans une autre forme de réalisation particulière de la présente invention, x, a et c sont chacun voisins de 0. Par « voisin de 0 » on désigne l'intervalle de 0 à 0,1.

I représente divers composés additionnels comprenant notamment 1) les impuretés usuellement présentes dans les composés calco-magnésiens naturels tels que les dolomies, les chaux magnésiennes ou les chaux dolomitiques, à savoir des phases dérivées de SiO₂, Al₂O₃, Fe₂O₃, MnO, P₂O₅, K₂O et/ou SO₃, 2) les composés de types silicates ou aluminates de calcium et/ou de magnésium.

D représente divers composés additionnels I et 3) les incuits ou les produits recarbonatés (MgCO₃ et CaCO₃), ou encore 4) la chaux vive (CaO) résiduelle résultant d'une hydratation incomplète.

De préférence, la somme de ces composés divers I ne dépasse pas 10 % en poids, de préférence 5 %, de préférence 3 % ou même 2 % du poids du composé calco-magnésien. Ainsi, de préférence, le pourcentage en poids de I, par rapport au poids total du composé calco-magnésien de formule (A), varie de 0,1 à 10%, avantageusement de 0,2 à 5%, plus avantageusement de 0,3 à 3%, encore plus avantageusement de 0,4 à 2%.

De préférence, la somme de ces composés divers D ne dépasse pas 40 % en poids, de préférence 30 %, de préférence 20 % ou même 10 % du poids du composé calco-magnésien de formule (AA). Ainsi, de préférence, le pourcentage en poids de D, par rapport au poids total du composé calco-magnésien de formule (AA), varie de 0,1 à 40%, avantageusement de 0,2 à 30%, plus avantageusement de 0,3 à 20%, encore plus avantageusement de 0,4 à 10%.

Dans une forme de réalisation particulière de la présente invention, ledit composé calco-magnésien est issu de l'hydratation de composés choisis dans le groupe constitué de la dolomie vive, semi calcinée ou totalement calcinée, des composés mixtes calco-magnésiens, en particulier des oxydes mixtes de calcium et de magnésium, dont la teneur en MgO est substantielle, à savoir supérieure à 10 % en poids par rapport au poids total de l'oxyde mixte, pour lesquels le coefficient molaire x/y est alors inférieur à 9, et leurs mélanges.

Dans une autre forme de réalisation particulière de la présente invention, ledit composé calco-magnésien est un dihydroxide de magnésium, obtenu par broyage de brucite, par hydratation de MgO ou par un procédé de synthèse, en particulier par un procédé de synthèse qui, à partir de dolomie hydratée, sépare la phase calcique de la phase magnésienne en formant un chlorure de calcium (à l'aide de chlorure de magnésium marin) ou un carbonate de calcium (à l'aide de CO₂).

Le composé calco-magnésien est formulé sous une forme non pulvérulente. Ainsi, le composé calco-magnésien est sous forme d'une suspension de particules solides dans une phase aqueuse, pouvant notamment avoir la consistance d'une pâte. Cette phase aqueuse est avantageusement de l'eau, pouvant comprendre des additifs. La teneur massique en matière sèche varie avantageusement de 5% en poids à 50% en poids, par rapport au poids total de la suspension. La teneur massique en matière sèche est avantageusement supérieure à 5% en poids, de préférence supérieure à 10% en poids, particulièrement supérieure à 15% en poids, plus particulièrement supérieure à 30% en poids, par rapport au poids total de la suspension. Dans une forme de réalisation particulière, la suspension calco-magnésienne selon la présente invention est obtenue par dilution d'une suspension calco-magnésienne plus concentrée, notamment dont la teneur en matière sèche est supérieure à 20% en poids, particulièrement supérieure à 30% en poids, en particulier supérieure à 40% en poids, plus particulièrement supérieure à 50% en poids, par rapport au poids total de la suspension ou de la pâte.

Dans une autre forme de réalisation particulière, la suspension calco-magnésienne selon la présente invention est obtenue par mélange de deux ou plusieurs suspensions calco-magnésiennes de compositions éventuellement différentes et/ou de concentrations éventuellement différentes. Ainsi, chaque composition de suspension calco-magnésienne peut ou non entrer dans le champ de l'invention.

Les particules solides présentent un d90 compris entre 4 et 500 µm, de préférence inférieur à 200 µm, en particulier inférieur à 100 µm, plus particulièrement inférieur à 20 µm, et de préférence supérieur à 10 µm, en particulier supérieur à 20 µm, plus particulièrement supérieur à 40 µm, et un d50 compris entre 1 et 200 µm, de préférence inférieur à 100 µm, en particulier inférieur à 50 µm, plus particulièrement inférieur 20 µm, et de préférence supérieur à 1,2 µm, en particulier supérieur à 2 µm.

La notation dx représente un diamètre, exprimé en µm, par rapport auquel x % en volume des particules mesurées possèdent un diamètre plus petit ou égal à cette valeur. Les tailles de particules sont déterminées par granulométrie laser dans le méthanol et sans ultrasons.

Dans une forme de réalisation particulière de la présente invention, la stabilité et/ou la viscosité de ladite suspension est modifiée en jouant sur la taille des particules du composé calco-magnésien, par exemple par broyage humide ou par séparation à l'air (cyclonage) du produit calco-magnésien avant sa mise en suspension. Dans ce cas, les particules solides de composé calco-magnésien présentent avantageusement un d90 inférieur à 30 µm, en particulier inférieur à 20 µm, plus particulièrement inférieur à 10 µm et un d50 de préférence inférieur à 8 µm, en particulier inférieur à 6 µm.

Dans une autre forme de réalisation particulière de la présente invention, la stabilité et/ou la viscosité de ladite suspension est modifiée par l'ajout d'additifs à ladite suspension, par exemple des composés sucrés choisis parmi les glucides, les mono-, di-, poly- et oligo-saccharides solubles ainsi que leurs dérivés solubles obtenus notamment par hydrogénation et oxydation, des polyacrylates, des polycarboxylates, des polyamines, des polyphosphonates ou leurs mélanges. Par stabilité de ladite suspension, on entend qu'il n'y a pas de variations majeures dans le temps de ladite suspension vis-à-vis des phénomènes de décantation mais aussi vis-à-vis de sa viscosité. De manière avantageuse, la viscosité de ladite suspension, mesurée à température ambiante au viscosimètre Brookfield équipé d'un mobile de type LV tournant à 100 tr/min, est inférieure ou égale 1500 mPa.s, de préférence inférieure ou égale à 1000 mPa.s.

La teneur en composé calco-magnésien, exprimée en extrait sec, varie avantageusement de 0,01 à 0,5 ppc, plus avantageusement de 0,05 à 0,2 ppc en poids par rapport au poids de la fraction solide minérale sèche, lorsqu'elle est présente.

La teneur en composé calco-magnésien, en absence de fraction solide minérale, dépend fortement du pH de l'émulsion. Pour réguler la rupture d'une couche d'accrochage ou d'épandange, en fonction notamment du pH de l'émulsion, de l'acide utilisé, le formulateur ajustera la teneur en composé calco-magnésien. Classiquement, celle-ci pourra varier de 0,1 à 6 % en poids, avantageusement de 0,2 à 3%, plus avantageusement de 0,2 à 2,5 % en poids de composé calco-magnésien (exprimé en matière sèche) par rapport au poids total de l'émulsion. La teneur pourra également être adaptée en fonction des contraintes techniques de la pompe.

### Emulsion cationique de bitume

L'émulsion cationique de bitume est avantageusement obtenue en mélangeant, en poids par rapport au poids total de l'émulsion :
- 50% à 75% d'un liant bitumineux,
- 25 à 50% d'une phase aqueuse contenant :
   i. 0,1% à 2%, en poids par rapport au poids total de l'émulsion, d'une composition émulsifiante
   ii. une quantité suffisante d'un acide pour ajuster le pH de la phase aqueuse à une valeur comprise entre 1,5 et 8,
   iii. et de l'eau pour complément de la formule à 100%.

Le pH de la phase aqueuse varie plus avantageusement entre 1,5 et 7, plus avantageusement entre 1,5 et 5,5, encore plus avantageusement entre 2 et 3,5.

### Liant :

Dans l'émulsion, la teneur en liant varie avantageusement de 50 à 75% en poids de liant, par rapport au poids total de l'émulsion, plus avantageusement de 60 à 70% en poids.

On entend par "liant" tout liant hydrocarboné d'origine fossile ou de synthèse utilisable pour la réalisation de matériaux routiers, notamment du bitume pur ou modifié par ajout de polymère(s). Le liant peut être un bitume de synthèse, naphténique ou paraffinique.

On entend par « bitume paraffinique » un bitume qui contient des paraffines, avantageusement en des teneurs mesurées par analyse calorimétrique différentielle (ACD ou DSC en anglais) allant de 0,5 à 4,5% en poids, par rapport au poids du bitume. Un bitume parraffinique a un indice d'acide inférieur à 2 mg KOH/g de bitume, avantageusement inférieur à 1 mg KOH/g de bitume.

L'indice d'acide du bitume est le nombre de milligrammes d'hydroxyde de potassium nécessaires pour la neutralisation des acides libres contenus dans un gramme de bitume. Il peut être mesuré par les protocoles décrits dans la norme ASTM D664- 11a ou la norme NF T 66-066.

Afin de décrire au mieux les différentes familles constituants le liant de synthèse nous pouvons citer les brevets suivants : FR 1 316 712, GB 1 226 234, EP 0 179 510, EP 0 330 281 et US 5 021 476.

Le liant pourra être un liant mou à dur, avantageusement d'un grade allant de 160/220 à 10/20 (classes de pénétrabilité déterminées selon les normes NF EN 12591 et NF EN 13924).

Par exemple pour un MBCF, le liant est un liant ayant une pénétrabilité mesurée selon la norme EN1426 comprise entre 50 et 220, plus avantageusement entre 70 et 100.

Le liant peut comprendre des additifs couramment utilisés dans le domaine routier, tels que des polymères (EVA ou éthylène-acétate de vinyle, SBS ou styrène-butadiène-styrène, SB ou styrène-butadiène) réticulés ou non, des poudrettes de caoutchouc, des cires végétales ou d'origine pétrochimique, des dopes d'adhésion, des acides en particulier des acides polyphosphoriques.

Le liant peut en outre comprendre un dope d'acide gras..

Le dope d'acide gras peut être tout acide gras et dérivés, en particulier des diacides gras, triacides gras, dimère d'acides gras ou trimère d'acides gras, adapté à une utilisation dans un matériau bitumineux.

Par « acide gras » on entend un acide mono-, di- ou tricarboxylique à chaîne aliphatique, saturée ou insaturée, contenant 10 à 28 atomes de carbone, avantageusement 12 à 20 atomes de carbone.

Les acides gras peuvent être d'origines fossiles, animales, végétales ou de synthèse. Ils peuvent avoir subi une fonctionnalisation chimique. Par origine animale on entend par exemple le suif. Par origine végétale on entend les huiles végétales, celles-ci sont avantageusement choisies parmi les huiles de tournesol, de soja, de colza, de lin, de coprah, d'arachide, d'olive, de maïs, de ricin, leurs dérivés ainsi que leurs mélanges. Ces matières grasses peuvent également provenir d'huiles usagées de l'industrie (agroalimentaire, papeterie,...).

Par « dérivés d'acides gras », on entend par exemple les acides gras polymérisés ou des diacides ou triacide d'acides gras. Les acides gras polymérisés comprennent des monomères d'acides gras, des dimères d'acides gras et des trimères d'acides gras. Par diacide ou triacide d'acides gras, on entend tout acide gras fonctionnalisé par une nouvelle fonction acide carboxylique sur au moins une des insaturations de sa chaîne hydrocarbonée, ladite fonction ayant réagi avec une autre fonction acide carboxylique d'un autre acide gras ou, respectivement, diacide gras.

La masse moléculaire des dérivés d'acides gras sera comprise préférentiellement entre 600 et 800 g/mol.

Avantageusement, le dope d'acide gras a un indice d'acide supérieur à 100, plus avantageusement supérieur à 150, encore plus avantageusement supérieur à 180.

L'indice d'acide du dope représente la quantité d'acide libre et est le nombre de milligrammes de potasse nécessaire pour neutraliser l'acidité de 1 gramme de produit, déterminé par potentiométrie.

Les acides gras peuvent être fonctionnalisés chimiquement et ainsi porter au moins une fonction chimique choisie parmi les fonctions alcool, ester, époxy, peroxyde, acide carboxylique et aldéhyde, avantageusement une fonction acide carboxylique.

Les acides gras sont avantageusement non saturés, et comprennent avantageusement au moins deux doubles liaisons carbone-carbone conjuguées. L'une ou l'autre de ces doubles liaisons peut avoir subi le greffage de molécules d'anhydride maléïque (conduisant à la formation de fonctions diacides carboxyliques sur la chaîne hydrocarbonée). Cette fonctionnalisation permet l'obtention de diacides ou de triacides reliant les acides gras par des ponts oxygène formés sur leurs chaînes hydrocarbonées.

De préférence, l'acide gras est choisi dans le groupe constitué de l'acide oléique, de l'acide linoléique, et leurs mélanges. Ces acides gras proviennent avantageusement d'huile(s) végétale(s) ou d'huiles usagées de l'industrie.

Le dope d'acide gras peut être ajouté au liant bitumineux en mélange avec les polymères ajoutés au liant ou en ligne.

La teneur en dope d'acide gras varie avantageusement de 0,3% à 2 % en poids, par rapport au poids du liant, plus avantageusement de 0,5 à 1% en poids.

### Emulsifiants

L'émulsion de bitume est une dispersion du liant dans l'eau, phase continue du système. Elle comprend une composition émulsifiante.

La teneur en composition émulsifiante varie avantageusement de 0,1 à 2% en poids, par rapport au poids total de l'émulsion, plus avantageusement de 0,13 à 1,2% en poids. La teneur en composition émulsifiante varie avantageusement de 1 à 20 kg par tonne d'émulsion, plus avantageusement de 1,3 à 12 kg par tonne d'émulsion.

La teneur en composition émulsifiante est également ajustée en fonction de la teneur en composé calco-magnésien envisagée, notamment afin de régler le temps de maniabilité.

Dans un mode de réalisation avantageux, la composition émulsifiante comprend principalement au moins une amine. En particulier, l'amine peut être choisie parmi :
- les alkylpropylènepolyamines ;
- les amines grasses ;
- les alkyles diamines ;
- les amidopolyamines ;
- les ammoniums quaternaires à chaîne grasse ;
- et leurs mélanges.

Dans les alkylpropylènepolyamines ou les alkyldiamines, le groupe alkyle est avantageusement un radical hydrocarboné, saturé ou insaturé, comprenant de 8 à 24 atomes de carbone, plus avantageusement 12 à 22 atomes de carbone, et/ou ses dérivés immédiats de cyclisation ainsi que ses dérivés oxyéthylés ou oxypropylés.

Les alkylpropylènepolyamines répondent avantageusement à la formule R-(NR₄-R₃)ₓ-NR₁R₂ dans laquelle
x est un entier allant de 1 à 4. Avantageusement x vaut 1.
R représente un radical hydrocarboné comprenant de 8 à 24 atomes de carbone, plus avantageusement 12 à 22 atomes de carbone, saturé ou insaturé, linéaire ou ramifié, éventuellement cyclisé. Ce radical dérive avantageusement d'acides gras de suif.
R₃ représente un radical hydrocarboné comprenant de 1 à 6 atomes de carbone, saturé ou insaturé, linéaire ou ramifié. Avantageusement R₃ représente un radical éthylène ou propylène.
R₄ représente un atome d'hydrogène, un radical hydrocarboné comprenant de 1 à 6 atomes de carbone, saturé ou insaturé, linéaire ou ramifié, ou un radical (CH₂-CR₅HO)_{z}H dans lequel R₅ est un atome d'hydrogène ou un radical méthyle, z vaut 1 ou 2. Avantageusement R₄ représente un radical méthyle ou éthyle.

R₁ et R₂ représentent, chacun, indépendamment l'un de l'autre, un atome d'hydrogène, un radical hydrocarboné comprenant de 1 à 6 atomes de carbone, saturé ou insaturé, linéaire ou ramifié ou un radical (CH₂-CR₅HO)_{z}H dans lequel R₅ est un atome d'hydrogène ou un radical méthyle, z vaut 1 ou 2. Avantageusement R₁ représente un radical méthyle ou éthyle. Avantageusement R₂ représente un radical méthyle ou éthyle. A titre d'exemple, on peut citer la suif trimèthylpropylène diamine.

Les amines grasses répondent avantageusement à la formule R-NR₁R_{2 ;} R, R₁ et R₂ étant tels que définis précédemment. A titre d'exemple, on peut citer la suif diméthylamine.

Les alkyldiamines répondent avantageusement à la formule NR₁'R₂'-R-NR₁R_{2 ;} R, R₁ et R₂ étant tels que définis précédemment. R₁' et R₂' représentent, chacun, indépendamment l'un de l'autre, un atome d'hydrogène, un radical hydrocarboné comprenant de 1 à 6 atomes de carbone, saturé ou insaturé, linéaire ou ramifié ou un radical (CH₂-CR₅HO)_{z}H dans lequel R₅ est un atome d'hydrogène ou un radical méthyle, z vaut 1 ou 2.

Les amidopolyamines répondent avantageusement à la formule R'CO-(NH-R_{"})ₐ-NH₂, dans laquelle
R' est un reste hydrocarboné, saturé ou insaturé, linaire ou ramifié comprenant de 12 à 24 atomes de carbone, avantageusement 16 à 24 atomes de carbone. Ce radical dérive avantageusement d'acides gras de tall oil (huile de tall) ou de suif.
R" est un radical éthylène,
a représente un entier allant de 2 à 5, de préférence a vaut 5
et/ou ses dérivés immédiat de cyclisation, en particulier les dérivés imidazoline.

L'amidopolyamine est avantageusement le ou les produits de réaction d'un acide gras tel que le Tall Oil ou la suif avec la diéthanolamine, et/ou diéthylènetriamine, et/ou la tétraéthylènpentamine et/ou la triéthylènetétramine.

Les ammoniums quaternaires peuvent en particulier être de formule (Rx)ₐN⁺(Ry)_{b}Y⁻ dans laquelle

Rx représente un radical hydrocarboné comprenant de 8 à 24 atomes de carbone, plus avantageusement 12 à 22 atomes de carbone, saturé ou insaturé, linéaire ou ramifié, éventuellement cyclisé

Ry représente un radical alkyle comprenant de 1 à 6 atomes de carbone, éventuellement hydroxylé, notamment méthyle, éthyle, propyle, hydroxyéthyle, hydroxypropyle

Y⁻ désigne un anion d'un acide minéral, en particulier un anion chlorure, ou d'un acide organique, notamment un anion acétate ou formiate.

b est un nombre entier égal à (4-a) et a pouvant prendre les valeurs de 1, 2 ou 3

Parmi les tensioactifs pertinents pour cette application on peut citer les produits commerciaux suivants :
- Dinoram^{®}S (Ceca) ou Redicote^{®}E9 (Akzo Nobel) : N alkyl suif propylène diamine
- Emulsamine^{®}L 60 (Ceca) : Préparation à base d'amide gras de tallol, N-(3-dimethylamino)propyles (> 50 %) et Emulsamine^{®}LZ (> 25 %) avec un hydrocarbure aromatique (> 1 %) et du diéthanolamine (> 1 %)
- Polyram^{®}S (Ceca): N-alkyl suif propylène polyamine avec Dinoram^{®}S (< 10 %), amines alkyl de suif (Noram^{®}S - < 5 %), nitrile de suif (< 10 %)
- Stabiram^{®}MS 601 (Ceca) : solution de dichlorure de N-alkyl suif N-diméthyl amino propyl N-triméthyl ammonium (> 50 %) dans un mélange eau/hexylène glycol (glycol > 20 %) avec Dinoram^{®}S (< 1 %)
- Dinoram^{®}O (Ceca) : N-(C16 et C18 alkyl insaturés) triméthylène diamine (diamine oléique)
- Emulsamine^{®}640 (Ceca) : Préparation à base d'amides gras de tallol (> 50 %), de Dinoram^{®}O (> 25 %) et de (Z)-octadec-9-enylamine (> 1 %)
- Indulin^{®}R 66 (Meadwestvaco) : Amides gras de tallol : N - [(diméthylamino)-3-propyl]
- Indulin^{®}R 33 (Meadwestvaco) : Amides gras de tallol (N-[(diméthylamino)-3-propyl]) (75-90 %), N-tallow alkyltrimethylenediamine (20-25%)
- Indulin^{®}GE F2 (Meadwestvaco) : Éthoxylate de nonylphénol (25-35 %), lignine alcalin (réaction produite avec diméthylamine et formaldéhyde) (15-20%), N-(alkyl en C14-18 et insaturés en C16-18)-triméthylènediamine (5-10%)
- Indulin^{®}GE F2 (Meadwestvaco) : alccols ethoxylés en C12-C14 (2,5-25 %), lignine alcalin (réaction produite avec diméthylamine et formaldéhyde) (10-20%), N-(alkyl en C14-18 et insaturés en C16-18)-triméthylènediamine (1-3%)
- Duomeen^{®}TTM (Akzo Nobel) : suiftriméthylpropylènediamine (90-100%), suifdiméthylamine (5-10%)
- Redicote^{®}404 (Akzo Nobel) : tallol, produits de réaction avec la tétraéthylènepentamine (100%)

On pourra utiliser un ou plusieurs de ces tensioactifs, seuls ou en mélanges.

La composition émulsifiante pourra également comprendre un agent émulsifiant non ionique. Cet agent pourra être choisi dans la famille des alcools gras éthoxylés, la partie hydrophobe de la molécule pouvant être de type nonylphénol-, octylphénol-, cétytique, oléique..., la partie hydrophile étant constituée de plusieurs groupes éthoxy.

### Acide :

La phase aqueuse de la composition émulsifiante comprend également une quantité suffisante d'un acide minéral ou organique (par exemple : acide citrique, acide acétique), avantageusement un acide minéral. L'acide permet d'ioniser les fonctions amines des émulsifiants pour permettre leur dissolution dans l'eau.

La teneur en acide est ajustée à la teneur en émulsifiant (en fonction de la nature des granulats, de la température d'application...) pour avoir un pH de la phase aqueuse compris entre 1,5 et 8, avantageusement entre 1,5 et 7, plus avantageusement entre 1,5 et 5,5, encore plus avantageusement entre 2 et 3,5.

L'acide est avantageusement l'acide chlorhydrique, l'acide phosphorique ou un acide polyphosphorique. L'acide polyphosphorique est un oligomère d'acide phosphorique comprenant des molécules selon l'une ou l'autre des formules structurelles PₙO₃ₙ₊₁⁽ⁿ⁺²⁾⁻ dans laquelle n est un nombre entier supérieur ou égal à 1, avantageusement 1, 2 ou 3, ou P₂O₅·x(O²⁻), dans laquelle x est compris entre 0 et 1.

### Autres :

L'émulsion pourra contenir du latex synthétique ou naturel. Par latex on entend une dispersion de polymères (SBS, SB) réticulés ou non en phase aqueuse. Ce latex est incorporé dans la phase aqueuse avant émulsification ou en ligne pendant la fabrication de l'émulsion soit encore après fabrication de l'émulsion.

On peut également ajouter des fluxants d'origine pétrolière ou issus des agroressources. Ces fluxants peuvent être ajoutés durant la fabrication de l'émulsion ou lors de la fabrication des enrobés à l'émulsion.

L'agent fluxant est avantageusement un fluxant d'origine pétrolière ou pétrochimique. Un fluxant pétrolier est un produit issu de la distillation du pétrole brut (fraction(s) légère(s)), ayant pu subir éventuellement une opération d'hydrotraitement. En particulier, l'agent fluxant est choisi dans le groupe constitué par les agents fluxants commercialisés par Total (Greenflux^{®} 2000^{®}, Greenflux SD) ou par Exxon (Varsol^{®}).

L'agent fluxant est avantageusement un fluxant d'origine naturelle non fossile (origine végétale ou animale). Un fluxant d'origine naturelle non fossile est constitué d'une huile naturelle non fossile, de ses dérivés tels que les esters d'acide gras et de leurs mélanges. Ces agents fluxants d'origine naturelle non fossile sont bien connus de l'homme du métier.

Préférentiellement, on utilisera les huiles végétales telles que les huiles de tournesol, de colza, d'arachide, de coprah, de lin, de palme, de soja, d'olive, de ricin, de maïs, de courge, de pépins de raisin, de jojoba, de sésame, de noix, de noisette, de bois de chine, le tall oil, leurs dérivés, ainsi que leur mélanges.

En particulier, le fluxant d'origine naturelle non fossile est choisi dans le groupe constitué par :
- les esters des acides glycolique, lactique et gluconique, les esters méthyliques, éthyliques et isobutyliques des acides glutarique, succinique et adipique, et leur mélanges (tel que décrit dans la demande WO2006070104) ;
- les éthers ou esters d'un produit issu de la déshydratation interne d'un sucre, de préférence d'un sucre hydrogéné, en particulier un éther ou un ester d'isosorbide, de sorbitan, d'isommanide, de mannitan, d'isodide ou d'iditan, ou un mélange d'au moins deux de ces produits, plus avantageusement le diméthylisosorbide (tel que décrit dans la demande WO2006070104) ;

- des acides, des esters, en particulier des monoesters dont les monoesters méthyliques, ou des amides, éventuellement fonctionnalisés par oxydation, obtenus à partir d'huiles végétales ou animales (huile de pin, de tournesol, de colza, de lin, de ricin, d'arachide, de coprah, d'olive, de palme, de coton, de maïs, de suif, de saindoux, de palmiste, de soja, de courge, de pépins de raisin, d'atgan, de jojoba, de sésame, de noix, de noisette, de bois de chine, de riz - tels que décrits dans les demandes FR 2 786 603, FR 2 910 477, EP 900 822, FR 2 721 043 ou FR 2 891 838), et leurs mélanges
- les huiles lourdes d'origine minérale, les huiles et graisses animales et végétales, et leurs dérivés fonctionnalisés avec des produits de transestérification et des produits de saponification et leurs mélanges, les mono-, di- ou triacides carboxyliques organiques, saturés ou insaturés, ayant de 6 à 24 atomes de carbone pouvant être ramifiés (tels que décrits dans la demande AT 406 375) ;
et leurs mélanges.

Un additif de siccativation, tel que l'octoate de manganèse, pourra être ajouté à ces huiles et dérivés afin de favoriser les réactions d'oxydation.

### Fraction solide minérale

Par "fractions solides minérales", on entend ici toutes fractions solides utilisables pour la réalisation de matériaux bitumineux pour la construction routière, tels que par exemple définis dans la norme NF EN 13043. Les fractions solides utilisables pour la réalisation de matériaux bitumineux comprennent notamment les granulats minéraux naturels (gravillons, sable, fines) issus de carrière ou de gravière, les produits de recyclage tel que les agrégats d'enrobés résultant du recyclage des matériaux récupérés lors de la réfection des routes ainsi que des surplus de centrales d'enrobage, les granulats provenant du recyclage de matériaux routiers y compris les bétons, les laitiers en particulier les scories, les schistes en particulier la bauxite ou le corindon, les poudrettes de caoutchouc provenant du recyclage des pneus notamment, ainsi que leurs mélanges en toutes proportions.

Les granulats minéraux naturels comprennent :
- éventuellement des fines d'apport dont les éléments sont inférieurs à 0,063 mm
- du sable dont les éléments sont compris entre 0 mm et 2 mm ou entre 0 mm et 4 mm ;
- des gravillons, dont les éléments ont des dimensions supérieures à 2 mm ou supérieures à 4 mm (par exemple entre 2 mm et 6 mm, entre 4 mm et 10 mm, ...)

La taille des granulats minéraux est mesurée par les essais décrits dans la norme NF EN 933-1 (version mai 2012).

On entend par « agrégats d'enrobés » des enrobés (mélange de granulats et de liants bitumineux) provenant de fraisage de couches d'enrobé, de concassage de plaques extraites de chaussées en enrobées, de morceaux de plaques d'enrobés, de déchets d'enrobé ou de surplus de productions d'enrobés (les surplus de productions sont des matériaux enrobés ou partiellement enrobés en centrale résultant des phases transitoires de fabrication). Ces éléments et les autres produits de recyclage pourront être concassés et/ou tamisés pour ne pas excéder un diamètre de 20 mm, avantageusement 14 mm.

On désigne également les « fractions solides minérales » par les termes « fraction minérale 0/D »

Cette fraction minérale 0/D peut être séparée en plusieurs granulométries en fonction des matières premières sélectionnées et des applications : la fraction minérale 0/d₁ et les fractions minérales d₁/dx et dx/D.

Généralement, pour des MBCF, on utilise des granulométries 0/D de 0/4, 0/6, 0/6 discontinu, 0/8, 0/8 discontinu ou 0/10 recomposées, avec éventuellement humidification pour limiter la ségrégation lors du transport. La fraction minérale solide comprend avantageusement de 6 à 10% en poids de fines, par rapport au poids total de la fraction minérale.

La fraction minérale solide est mélangée avec une émulsion de bitume pour conduire à un matériau routier bitumineux obtenu par enrobage.La fraction minérale solide constitue avantageusement 80 à 97%, plus avantageusement 85 à 96%, du poids du matériau bitumineux.

On peut également ajouter à la fraction minérale solide des fibres, avantageusement des fibres cellulosiques. En particulier, les fibres sont en polyacrylonitrile de taille comprise entre 4 et 12 mm. La teneur en fibre varie avantageusement de 0,05 à 0,5 ppc (partie pour cent en poids)/ granulats secs, préférentiellement entre 0,07 et 0,2 ppc.

### Matériaux routiers bitumineux :

Ces émulsions cationiques de bitumes sont utilisées dans la fabrication de matériaux routiers bitumineux, pouvant être obtenus par enrobage ou par répandage. Les domaines d'utilisation des émulsions de bitume sont bien connus de l'homme de l'art qui pourra par exemple se référer au guide les émulsions de bitume, SFERB et USIRF.

Le matériau est avantageusement choisi parmi les matériaux MBCF, des enrobés à l'émulsion, des graves émulsions, des bétons bitumineux à l'émulsion. Les matériaux peuvent en particulier servir pour la fabrication de couches de roulement, de couche d'accrochage, de couche d'assise, de couche de liaison.

Dans une première variante, les matériaux routiers bitumineux sont obtenus par enrobage.

L'invention a pour objet un matériau routier bitumineux obtenu par mélange d'une fraction minérale solide avec une émulsion cationique de bitume, de type liant dans l'eau, caractérisé en ce que l'on ajoute à la fraction minérale une suspension aqueuse de particules solides d'un composé calco-magnésien de formule (A), tel que de formule (AA). La fraction minérale, l'émulsion et le composé calco-magnésien sont tels que définis précédemment.

Dans le matériau bitumineux, la teneur en liant résiduel est avantageusement comprise entre 5 et 12%, plus avantageusement de 6 et 10% par rapport au poids des granulats secs.

L'invention a également pour objet un procédé de préparation d'un tel matériau, comprenant les étapes suivantes
a. ajouter, à une fraction minérale solide, une suspension aqueuse de particules solides d'un composé calco-magnésien de formule (A), tel que de formule (AA), tel que défini précédemment
b. Le cas échéant, ajouter à la fraction minérale solide de l'eau d'apport et/ou un additif retardateur de prise
c. Ajouter la fraction minérale solide de l'étape a) ou b) à une émulsion cationique de bitume

Les étapes peuvent avantageusement être réalisées dans l'ordre séquentiel suivant, a, b, c ou b, a, c ou b,c+a (« c+a » signifiant que les étapes a et c sont réalisées en même temps).

A la fraction minérale solide, on ajoute (étape a), une suspension aqueuse de particules solides d'un composé calco-magnésien tel que décrit ci-dessus. On peut également ajouter des fibres, telles que décrites ci-dessus.

En fonction des conditions climatiques, de l'état de sècheresse de la fraction minérale solide, l'opérateur peut ajouter à la fraction minérale solide de l'eau d'apport.

En règle générale la teneur en poids totale en eau de la fraction minérale solide, constituée de l'eau d'apport et de l'eau naturellement présente dans la fraction minérale solide, varie selon les applications de 5 à 15 %. Les pourcentages sont exprimés en poids par rapport au poids total de la fraction minérale solide.

L'opérateur peut ajouter également un dope (solution éventuellement diluée d'un émulsifiant), qui servira principalement de retardateur de prise. Ces émulsifiants peuvent être des amines grasses mais aussi des ammoniums quaternaires.

Dans un mode préférentiel, le composé calco-magnésien et/ou l'additif retardateur de prise n'est pas pulvérulent : il se présente avantageusement sous la forme d'une suspension. Ainsi, les opérateurs n'ont pas à manipuler de produits pulvérulents.

Dans une deuxième variante, les matériaux routiers bitumineux sont obtenus par répandage. Ceci permet notamment la fabrication de couches d'accrochage.

L'invention a également pour objet un procédé d'obtention d'une couche d'accrochage sur un support par répandage d'une émulsion cationique de bitume, caractérisé en ce qu'il comprend les étapes suivantes :
i. application de l'émulsion cationique de bitume sur le support,
ii. application d'un agent de rupture,
caractérisé en ce que l'agent de rupture comprend une suspension aqueuse de particules solides d'un composé calco-magnésien de formule (A), tel que de formule (AA), tel que défini précédemment.

L'étape i. pourra être précédée d'une étape d'application d'eau sur le support.

L'agent de rupture peut être :
- mélangé à l'émulsion dans la buse avant pulvérisation
- projeté sur le pinceau d'émulsion bitumineuse tombant de la répandeuse (FR2573455)
- projeté sur l'émulsion bitumineuse.

Dans ce dernier cas, l'agent de rupture est projeté simultanément à l'émulsion bitumineuse tombant de la répandeuse. Cette disposition permet la rupture dans la masse de l'émulsion bitumineuse.

Dans ce procédé, la teneur en composé calco-magnésien varie avantageusement de 0,1 à 6 % en poids sec, avantageusement de 0,2 à 3%, en poids de composé calco-magnésien par rapport au poids total de l'émulsion.

Cette couche d'accrochage sert ensuite à l'accrochage d'un matériau routier bitumineux, avantageusement d'une couche d'enrobés bitumineux.

Dans ces procédés, la teneur en chacun des composants, en particulier en composé calco-magnésien, est telle que décrite précédemment.

L'invention va maintenant être explicitée avec un exemple de matériau routier particulier, les matériaux bitumineux coulés à froid (MBCF). Les MBCF, encore appelés enrobés coulés à froid (ECF), sont des enrobés hydrocarbonés réalisés à partir de granulats, d'une émulsion de liant hydrocarboné et éventuellement de dopes et/ ou d'additifs, dont les caractéristiques permettent un enrobage sans séchage et chauffage des granulats.

Après sa mise en œuvre et rupture de l'émulsion, ce revêtement coulé à froid en très faible épaisseur (généralement de 6 à 13 mm d'épaisseur par couche) doit atteindre sa consistance définitive (montée en cohésion) très rapidement. Le formulateur doit donc conjuguer deux aspects antinomiques : obtenir un matériau fluide juste après la fabrication de manière à pouvoir le mettre en œuvre en couche mince, puis, une fois mis-en-œuvre, obtenir une montée en cohésion aussi rapide que possible de manière à rouvrir le chantier au trafic le plus vite possible, limitant ainsi la gêne aux usagers de la route.

Ainsi, les paramètres essentiels gouvernant la formulation des MBCF sont les suivants :
- la maniabilité initiale du MBCF : optimisation des proportions des différents constituants (eau, additifs, formulation de l'émulsion...) pour obtenir un délai de mise en œuvre suffisant et ainsi permettre le mélange des granulats avec l'émulsion dans le malaxeur. On définit un temps de maniabilité (tm), encore appelé temps de fluidité ou de consolidation, comme la durée entre (1) la mise en contact de la fraction minérale solide et de l'émulsion de bitume et (2) le début de la prise du MBCF.
- la cinétique de "montée en cohésion" : le MBCF, une fois appliqué sur la chaussée, doit acquérir une montée en cohésion le plus rapidement possible pour l'ouverture au trafic. Pour des températures de mûrissement allant de 7 à 40 °C, un délai de 30 minutes est considéré comme pertinent pour l'homme de l'art afin de répondre aux cahiers des charges les plus stricts. L'origine physico-chimique de cette montée en cohésion est liée au passage d'une phase initiale où le liant bitumineux est sous forme de fines gouttelettes dans l'eau (émulsion), ce qui confère donc un caractère initialement liquide au MBCF, à une phase finale où le liant bitumineux forme un film continu à forte cohésion, ce qui donne au MBCF sa résistance au trafic. La déstabilisation de l'émulsion, via par exemple l'emploi d'un rupteur, permet de contrôler les phases intermédiaires où les gouttelettes de liant bitumineux s'agrègent d'abord pour former un gel puis fusionnent, entrainant la contraction du gel. Ces processus suivent une cinétique qui dépend notamment des répulsions électrostatiques entre gouttelettes et donc de la nature du liant bitumineux, de l'émulsifiant et de la composition globale de la phase aqueuse (pH, ions), Cette cinétique conditionne la rapidité de la montée en cohésion du MBCF qui pourra se traduire par une sensibilité ou non du matériau aux conditions de mûrissement au jeune âge. Ces phénomènes étant éminemment complexes, on valide que la montée en cohésion est correcte à l'aide de plusieurs paramètres.

Tout d'abord, le temps de maniabilité (tm) définit plus haut quantifie le temps pendant lequel l'émulsion reste suffisamment fluide, permettant ainsi la mise-en-oeuvre du MBCF. On définit également un temps de cohésion (tc), comme le temps pour lequel la cohésion du MBCF est suffisante pour l'ouverture au trafic. Entre ces deux extrêmes, on définit de plus un temps de rupture : tr, pour lequel l'émulsion dans le matériau bitumineux coulé à froid est totalement rompue.

Enfin, au-delà de la mesure du temps de cohésion, la bonne résistance au trafic est aussi évaluée par la résistance à l'usure (ou à l'abrasion). Cela se fait via un essai effectué après un mûrissement plus ou moins long pour s'assurer après la remise sous trafic de la durabilité du matériau bitumineux coulé à froid. En particulier, on veut éviter le départ de granulat sous le trafic (parfois appelé "gravillonnage").

La présente invention permet d'obtenir des MBCF qui possèdent une bonne montée en cohésion. Celle-ci est gouvernée par plusieurs phénomènes, notamment le temps de maniabilité, le temps de rupture et la résistance à l'usure.

### Temps de maniabilité

Le temps de maniabilité définit plus haut mesure le temps pendant lequel le mélange reste fluide, permettant ainsi une mise en place aisée à l'aide des machines spécifiques pour les MBCF. Afin de le mesurer, on effectue en laboratoire des essais dans un récipient sur des gâchées de 400 g à 1000 g de matériaux secs. Après mise en contact des constituants, l'opérateur déclenche son chronomètre et apprécie visuellement le changement d'état du matériau bitumineux coulé à froid (passage de l'état liquide à pâteux) en l'agitant manuellement à l'aide d'une spatule à vitesse constante. Lorsque l'opérateur estime que le mélange devient trop visqueux, il arrête le chronomètre et note le temps correspondant comme le temps de maniabilité de la formule testée.

Cet essai est réalisé à une température contrôlée (classiquement entre 20 et 25 °C). Les exigences sont un temps de maniabilité supérieur à 90s, avantageusement compris entre 90 et 180 s, plus avantageusement compris entre 90 et 120 s.

### Temps de rupture

Le « temps de rupture » définit plus haut, caractérise le temps nécessaire pour que le liant bitumineux perde sa forme initiale d'émulsion. Ce temps de rupture est mesuré à l'aide de l'appareil de cohésion (NF EN 12274-4) grâce auquel un papier buvard, soumis à une pression de 0,2 MPa, est appliqué à la surface d'une galette du MBCF soumis à l'essai. Le temps de rupture correspond au temps à partir duquel le papier n'est plus tâché par l'émulsion. Dans le cadre de la présente l'invention, le temps de rupture est avantageusement inférieur à 20 min.

### Temps de cohésion / Essai de fracture résistance à l'usure

Plutôt que de mesurer directement un temps de cohésion, tel que défini plus haut comme étant le temps à partir duquel le MBCF devient apte à supporter le trafic, il apparaît plus simple de mesurer la cohésion du MBCF après un temps donné, par exemple une demi-heure, et de s'assurer que la cohésion est alors suffisante via l'Essai de Fracture.

### Essai de fracture

Cet essai permet de quantifier la cohésion des MBCF. Des éprouvettes de MBCF de dimension 120^{∗}120^{∗}10 mm sont fabriquées après en avoir vérifié le temps de prise. Après un temps 30 minutes à 18°C-20°C, 55% d'hygrométrie, le MBCF est démoulé et positionné sur l'appareil avec un contrepoids placé sur sa partie fixe (en général, la moitié de l'enrobé est placé dans le vide). On mesure alors le temps nécessaire à la cassure de l'enrobé soumis à son propre poids après ouverture de la trappe. Le résultat est donné en secondes et représente le temps de fracture. Plus le temps est élevé plus le matériau bitumineux coulé à froid est résistant et donc plus la montée en cohésion est avancée.

On considère que la montée en cohésion est bonne si dans les conditions standards de conservation (30 min à 18°C-20 °C, 55% d'hygrométrie) le temps au bout duquel intervient la fracture est supérieur à 10 s, avantageusement supérieur à 15s. En fonction de la fraction granulaire, on peut obtenir des temps de fracture de l'ordre de 50s ou 70 s. Selon l'invention, cet essai est réalisé avec un bitume paraffinique. On peut réaliser un essai de référence avec un bitume naphténique. Dans l'invention, on recherche un temps de fracture au moins aussi long que l'essai de référence.

### Modification de l'essai normalisé de résistance à l'usure WTAT (Wet track abrasion test)

L'essai NF EN 12274-5 (4.3.2) peut être utilisé comme décrit dans la norme et dans ce cas on évalue la cohésion d'un matériau bitumineux coulé à froid après un mûrissement favorable (au moins 15 h à 60 °C).

Cependant, cet essai normalisé seul n'est pas représentatif de la mise en œuvre sur chantier ; les conditions de mûrissement étant trop favorables. Afin de se rapprocher des problèmes de cinétique de montée en cohésion au jeune âge, un autre essai a été développé. Cet essai consiste à réaliser l'essai d'usure tel que décrit dans la norme NF EN 12274-5 après des conditions de mûrissement plus sévères pour qualifier les performances mécaniques du matériau bitumineux coulé à froid lors de sa mise sous trafic.

Par formule, deux essais sont réalisés, après une heure de mûrissement à température ambiante :
- 18 h à 55 % d'hygrométrie et 18 °C : conditions de mûrissement favorables, simulation d'un mûrissement par temps sec
- 18 h à 100 % d'hygrométrie et 18°C: conditions de mûrissement défavorables, simulation d'un mûrissement par temps humides

Après ces mûrissements, les éprouvettes sont immergées 1 heure dans l'eau avant d'être abrasées sous eau pendant 5 minutes à température ambiante.

Cet essai a pour but d'évaluer l'influence des conditions de mûrissement (température, hygrométrie) sur les propriétés mécaniques au jeune âge d'un ECF. Cet essai peut être réalisé à trois températures (10, 18 ou 30°C) et à deux hygrométries (55 et 100%) différentes.

On considère qu'un MBCF est convenable si la perte de masse (par rapport à la zone abrasée) en fonction des conditions de mûrissement est :
- < 5 % de perte si l'hygrométrie est de 55 %, à 18°C
- < 25 % de perte si l'hygrométrie est de 100 %, à 18°C

Pour les MBCF à base de bitume paraffinique ou de synthèse, le pH cible est compris entre 7 à 9, et préférentiellement entre 7,5 et 8,5. Avantageusement, on choisit le couple acide/base qui permet d'atteindre progressivement cette valeur cible. Des courbes de remontées de pH avec les laits calco-magnésiens selon l'invention sont données dans les exemples.

De manière surprenante, les suspensions aqueuses de composés calco-magnésiens selon l'invention permettent de tamponner efficacement les mélanges émulsions de bitumes/fraction minérale solide alors que l'utilisation d'un lait de chaux hydratée ne fonctionne pas en présence de bitume paraffinique, quel que soit l'acide utilisé pour fabriquer l'émulsion (en particulier acide phosphorique ou acide chlorhydirique).

L'ajout d'un lait du composé calco-magnésien permet d'améliorer la maniabilité sans perte d'adhésivité.

Par ailleurs, en fonction de la concentration en composé calco-magnésien, de sa nature (ratio phase calcique, phase magnésienne), de la nature pétrographique des granulats, on peut prévoir une augmentation de la teneur en émulsifiant (par exemple de un à quelques kg/t dans l'émulsion) et/ou l'ajout de retardateur pour améliorer les propriétés d'adhésion, par exemple en arrière-saison.

Ce matériau bitumineux coulé à froid présente de bonnes propriétés mécaniques, compatibles avec les utilisations souhaitées, en particulier qualité d'enrobage, solidité de l'enrobage (pas de désenrobage), résistance à l'abrasion (tests WTAT).

Les exemples qui suivent illustrent l'invention mais ne sont pas limitatifs. Les matériaux bitumineux coulé à froid sont utilisés pour illustrer les propriétés mécaniques des matériaux routiers obtenus selon l'invention.

Légende des figures :
Pour toutes les figures : Abscisse : temps en min, ordonnée : pH
Figure 1 :

| | |
|---|---|
| Trait plein, losanges : | HCl/Chaux |
| Pointillés, carrés : | H₃PO₄/Chaux |
| Pointillés, triangles : | HCl/ciment |
| Pointillés, croix : | H₃PO₄/Ciment |
| Trait plein, étoiles : | HCl/lait de chaux SLS 33 |
| Tirets, ronds : | H₃PO₄/ lait de chaux SLS 33 |

Figures 2 et 3 :

| | |
|---|---|
| Trait plein, triangles : | HCl/lait de Chaux n° 1 |
| Tirets, triangles : | H₃PO₄/lait de chaux n° 1 |
| Trait plein, ronds : | HCl/Lait n° 2 |
| Tirets, ronds : | H₃PO₄/Lait n° 2 |
| Trait plein, carrés : | HCl/lait n° 3 |
| Tirets, carrés : | H₃PO₄/ lait n° 3 |
| Pointillés, croix : | H₃PO₄/Ciment |

### Exemple 1 : Essais de remontée de pH

On simule la remontée de pH d'un enrobé bitumineux coulé à froid en mesurant l'évolution du pH d'une solution comprenant :
- 20 g de filler < 63 µm
- 18 g eau déminéralisée
- 11 g d'eau acidifiée à pH = 2 (avec de l'acide HCl ou H3PO4)
- 0,1 g d'additif minéral (0.5 ppc/ filler sec) - cette valeur est exprimée en poids de la suspension.

### Avec des additifs de référence :

La remontée de pH dans un matériau bitumineux coulé à froid (MBCF) a été simulée en présence de chaux hydratée Asphacal^{®} H provenant de l'usine Lhoist de Boran, de lait de chaux hydratée (Asphacal ^{®} SLS33 de la société Lhoist) ou de ciment (CEM II 32.5) avec de l'acide chlorhydrique ou de l'acide phosphorique.

Ces essais ont été réalisés avec du passant à 63 µm de la carrière Moreau.

Les résultats sont reportés sur la figure 1.

Les courbes de remontée de pH de la figure 1 montrent clairement que le ciment en présence d'acide phosphorique permet de tamponner le pH du milieu à un plateau proche de 8 après stabilisation.

Pour des remontées de pH plus importantes, les MBCF présentent soit des temps de maniabilité trop courts soit une cinétique de montée en cohésion trop longue, voire des défauts d'adhésivité.

### Avec les composés selon l'invention :

Quatre laits calco-magnésiens ont été testés :
- Lait n°1 : produit industriel fourni par Lhoist, contenant 30 % en poids de chaux dolomitique semi-hydratée de composition après mise en suspension, n = 0,460, m = 0,065 soit x = 0,525, et a = 0,440, b = 0,035, c = 0,000 soit y = 0,475 et x/y = 1,11) et I = 2,3 %. Ce lait possède un d50 de 35 µm et un d90 de 152 µm.
- Lait n°2 : dilution à 10% en poids de matière sèche du lait n°1, ayant donc la même composition et la même granulométrie.
- Lait n°3 : Solution industrielle de magnésie (Mg(OH)2) obtenue par précipitation à partir de MgCl₂ marin et de chaux, diluée à 10 % en poids, de composition après mise en suspension n = 0,010, m = 0,000 soit x = 0,010, a = 0,000, b = 0,959, c= 0,031 (soit y = 0,990 et x/y = 0,010) et I = 1,09 %. Ce lait possède un d50 de 7 µm et un d90 de 27 µm.
- Lait n°4 : Mélange de 60% en poids de lait de carbonate de calcium (CaCO₃) obtenu par mise en suspension de 75% en poids de CaCO₃ broyé avec un d50 de 1,6 µm et un d90 de 12 µm, et 40% en poids de lait n°3. Cela donne pour le lait n°4 une composition après mise en suspension n = 0,004, m = 0,557 soit x = 0,561, a = 0,000, b = 0,422, c= 0,017 (soit y = 0,435 et x/y = 1,28) et I = 1,27 %.

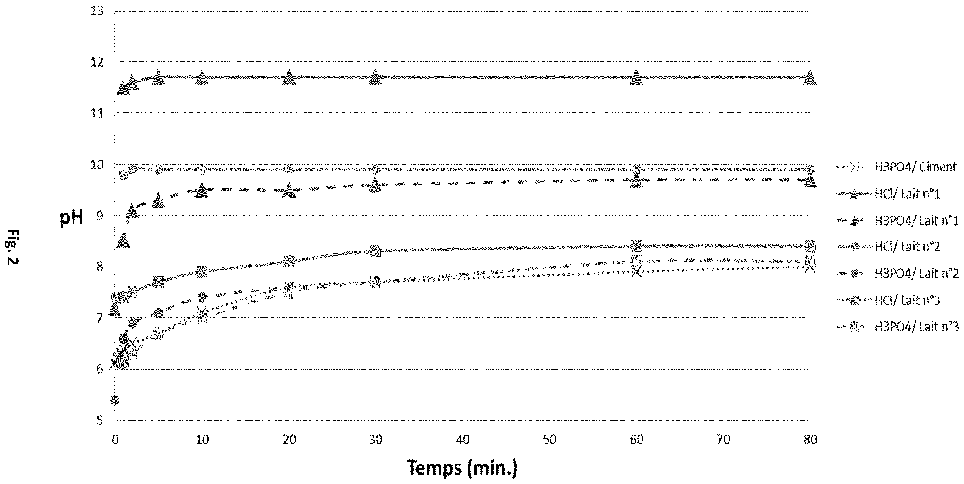

Des essais ont été réalisés avec du passant à 63 µm de la carrière Moreau. Les résultats sont reportés sur la figure 2 (la courbe H3PO4/ciment y est également reportée pour comparaison).

Le lait n°3 et n°2 présentent une remontée de pH en présence d'acide phosphorique équivalente à celle mesurée avec le couple ciment/ H₃PO₄.

Le lait n°3 en présence d'acide chlorhydrique présente une remontée de pH proche du couple ciment/H₃PO₄.

Le lait n°4 (non représenté) présente la même remontée de pH que le lait n°3.

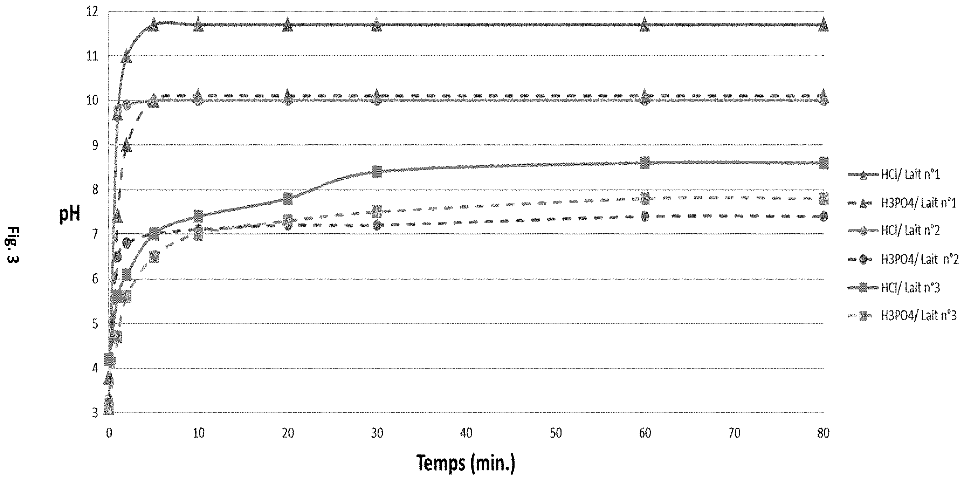

Pour s'assurer du pouvoir tampon de ces nouveaux laits calco-magnésiens, ces essais de remontée de pH ont également été réalisés avec un granulat acide (Duro) : figure 3. Par rapport aux courbes de remontées de pH obtenues avec les matériaux Moreau, on n'observe pas une différence significative après stabilisation.

### Exemple 2 : MBCF avec un lait calco-magnésien selon l'invention et comparatifs

Des essais de formulation de MBCF avec les laits calco-magnésiens selon l'invention, de la chaux hydratée et du ciment ont été réalisés. Les granulats utilisés pour ces essais proviennent des carrières Moreau. On utilise le lait n°2 tel que défini dans l'exemple 1. Trois formules d'émulsions ont été utilisées :

**Tableau 1**

| Formules | | | F1 | F2 | F3 |
|---|---|---|---|---|---|
| Bitume | Nature | | 70/100 Paraffinique + 0,8 % Radiacid^{®} 121 | 70/100 Paraffinique + 0,8 % Radiacid^{®}121 | 70/100 Naphténique |
| | Teneur (kg/t) | | 600 | 600 | 600 |
| Phase aqueuse | Emulsifiant^{∗} | Nature | Duomeen^{®}TTM / Redicote^{®}404 | Duomeen^{®}TTM / Redicote^{®}404 | Stabiram^{®} MS 301 |
| | | Teneur (kg/t) | 3/2 | 4,5/3 | 9 |
| | Acide | Nature | H₃PO₄ | H₃PO₄ | HCl |
| | | Teneur (kg/t) | 4 | 8 | 1,2 |
| | Eau (kg/t) | | 400 | 400 | 400 |

| | | | | | |
|---|---|---|---|---|---|
| ^{∗}Les noms de marque sont définis dans la description | | | | | |

La fraction minérale solide est constituée de granulats provenant de la carrière Moreau avec les granulométries suivantes : 40% 0/2+ 30% 2/4 +30% 4/6. La fraction minérale solide comprend en outre 0,07 ppc (parties pour 100 en poids) de fibres.

La teneur en émulsion est de 11,2 ppc.

Les valeurs sont exprimées en poids par rapport au poids total de la fraction minérale.

Les formules des MBCF sont les suivantes :

**Tableau 2**

| Formule MBCF | | 1 | 2 | 3 | 4 | 5 | 6 |
|---|---|---|---|---|---|---|---|
| Granulat | | Moreau | Moreau | Moreau | Moreau | Moreau | Moreau |
| Formule émulsion | | F3 | F1 | F1 | F2 | 20%F1 +80%F2 | 80%F1 + 20%F2 |
| Additif minéral | Nature | Chaux | Chaux | Ciment | Lait n°2 | Lait n°3 | Lait n°4 |
| | teneur (ppc/granulats) | 0,5 | 0,5 | 0,5 | 0,5 | 0.5 | 0.5 |

| Formule MBCF | 1 | 2 | 3 | 4 | 5 | 6 | |
|---|---|---|---|---|---|---|---|
| Eau de mouillage (ppc/granulats secs) | 10 | 10 | 11 | 10 | 10 | 10 | |
| Temps de maniabilité (s) | 90 | <5 | 90 | 130 | 140 | 120 | |
| Temps de rupture (min) | 5 | - | 5 | 5 | 4 | 5 | |
| Temps de fracture (s) | 12 | - | 25 | 24 | 40 | 12 | |
| WTAT (%) 18°C 55% HR | 3 | - | 4 | 4 | 3 | 4 | |

Les pourcentages des émulsions F1 et F2 sont exprimés en poids, par rapport au poids total de l'émulsion F1+F2.

On constate que l'utilisation d'un lait calco-magnésien selon l'invention permet l'obtention d'un MBCF aux propriétés satisfaisantes. Les formules MBCF n° 1, 3 et 4 permettent d'obtenir un matériau répondant à l'ensemble des exigences des MBCF. Pour un bitume paraffinique avec ces émulsifiants, l'utilisation de chaux ne permet pas la fabrication d'un MBCF avec le cahier des charges attendu (pas de maniabilité suffisante). Le lait calco-magnésien selon l'invention, tout comme le ciment, permettent la fabrication d'un MBCF conforme. Par rapport au ciment, le lait calco-magnésien selon l'invention présente l'avantage, non négligeable, de ne pas être pulvérulent.

## Revendications

1. Utilisation d'une suspension aqueuse de particules solides d'un composé calco-magnésien de formule (A)
nCa(OH)₂.mCaCO₃.aMgO.bMg(OH)₂.cMgCO₃.I, dans laquelle
n, m, a et b représentent des coefficients molaires pour le composé calco-magnésien en suspension dans la phase aqueuse tels que
- n+m = x représente la proportion de phase calcique présente dans le composé calco-magnésien et où 0 < x ≤ 1
- a+b+c = y représente la proportion de phase magnésienne présente dans le composé calco-magnésien et où 0 < y ≤ 1
- x/y représente le rapport phase calcique sur phase magnésienne
I représente l'ensemble des divers composés additionnels
en tant qu'agent de régulation de rupture d'une émulsion cationique de bitume.

2. Utilisation selon la revendication 1, **caractérisée en ce que** dans la formule (A) le rapport x/y est compris entre 0,7 et 1,3, plus particulièrement x/y est 1± 0,1.

3. Utilisation selon la revendication 1 ou 2, **caractérisée en ce que**, dans la formule (A), a vaut 0.

4. Utilisation selon l'une quelconque des revendications précédentes, **caractérisée en ce que**, dans la formule (A), x, a et c sont chacun compris dans l'intervalle de 0 à 0,1.

5. Utilisation selon l'une quelconque des revendications précédentes, **caractérisée en ce que**, dans la formule (A), le pourcentage en poids de I, par rapport au poids total du composé calco-magnésien de formule (A), varie de 0,1 à 10%, avantageusement de 0,2 à 5%, plus avantageusement de 0,3 à 3%, encore plus avantageusement de 0,4 à 2%.

6. Utilisation selon l'une quelconque des revendications précédentes, **caractérisée en ce que** dans la suspension aqueuse de particules solides la teneur massique en matière sèche est supérieure à 5% en poids, de préférence supérieure à 10% en poids, particulièrement supérieure à 15% en poids, plus particulièrement supérieure à 30% en poids, par rapport au poids total de la suspension.

7. Matériau routier bitumineux obtenu par mélange d'une fraction minérale solide avec une émulsion cationique de bitume, de type liant dans l'eau, **caractérisé en ce que** l'on ajoute à la fraction minérale une suspension aqueuse de particules solides d'un composé calco-magnésien de formule (A) tel que défini à l'une quelconque des revendications 1 à 6.

8. Matériau selon la revendication 7, **caractérisé en ce que** ladite émulsion cationique de bitume est obtenue en mélangeant, en poids par rapport au poids total de l'émulsion :
- 50% à 75% d'un liant bitumineux,
- 25 à 50% d'une phase aqueuse contenant :
i. 0,1% à 2%, en poids par rapport au poids total de l'émulsion, d'une composition émulsifiante
ii.une quantité suffisante pour ajuster le pH de la phase aqueuse à une valeur comprise entre 1,5 et 8 d'un acide
et de l'eau pour complément de la formule à 100%.

9. Matériau selon la revendication 8, **caractérisé en ce que** la composition émulsifiante comprend une amine qui peut être choisie parmi les alkylpropylènepolyamines, les amines grasses, les alkyles diamines, les amidopolyamines, les ammoniums quaternaires à chaîne grasse et leurs mélanges.

10. Matériau selon l'une quelconque des revendications 7 à 9, **caractérisé en ce que** la teneur en composé calco-magnésien, exprimée en extrait sec, varie avantageusement de 0,01 à 0,5 partie pour cent en poids par rapport au poids de la fraction solide minérale sèche.

11. Matériau selon l'une quelconque des revendications 7 à 10 choisi parmi les matériaux bitumineux coulés à froid, des enrobés à l'émulsion, des graves émulsions, des bétons bitumineux à l'émulsion

12. Procédé de préparation d'un matériau selon l'une quelconque des revendications 7 à 11, comprenant les étapes suivantes
a. ajouter, à une fraction minérale solide; une suspension aqueuse de particules solides d'un composé calco-magnésien de formule (A) tel que défini à l'une quelconque des revendications 1 à 6
b. Le cas échéant, ajouter à la fraction minérale solide de l'eau d'apport et/ou un additif retardateur de prise
c. Ajouter la fraction minérale solide de l'étape a) ou b) à une émulsion cationique de bitume

13. Procédé d'obtention d'une couche d'accrochage sur un support par répandage d'une émulsion cationique de bitume, **caractérisé en ce qu'**il comprend les étapes suivantes:
i. application de l'émulsion cationique de bitume, telle que définie à la revendication 8 ou 9, sur le support,
ii. application d'un agent de rupture,
**caractérisé en ce que** l'agent de rupture comprend une suspension aqueuse de particules solides d'un composé calco-magnésien de formule (A) tel que défini à l'une quelconque des revendications 1 à 6.

14. Procédé selon la revendication 13, **caractérisé en ce que** la teneur en composé calco-magnésien varie de 0,1 à 6 % en poids sec, avantageusement de 0,2 à 3%, en poids de composé calco-magnésien par rapport au poids total de l'émulsion.

## Patentansprüche

1. Verwendung einer Suspension in Wasser von Feststoffpartikeln einer Calcium-Magnesium-Verbindung der Formel (A)
nCa(OH)₂.mCaCO₃.aMgO.bMg(OH)₂.cMgCO₃.I, wobei
n, m, a und b molare Koeffizienten für die Calcium-Magnesium-Verbindung in Suspension in der wässrigen Phase repräsentieren, so wie
- n+m = x repräsentiert die Proportion der Calciumphase, die in der Calcium-Magnesium-Verbindung vorhanden ist und wobei 0 < x ≤ 1
- a+b+c = y repräsentiert die Proportion der Magnesiumphase, die in der Calcium-Magnesium-Verbindung vorhanden ist und wobei 0 < y ≤ 1
- x/y repräsentiert das Verhältnis von Calciumphase zu Magnesiumphase
I repräsentiert die Gesamtheit der verschiedenen zusätzlichen Verbindungen
als Regulierungsmittel zum Brechen einer kationischen Bitumenemulsion.

2. Verwendung nach Anspruch 1, **dadurch gekennzeichnet, dass** in der Formel (A) das Verhältnis x/y zwischen 0,7 und 1,3 liegt, noch bevorzugter ist x/y 1± 0,1.

3. Verwendung nach Anspruch 1 oder 2, **dadurch gekennzeichnet, dass** in der Formel (A) a 0 ist.

4. Verwendung nach einem der vorhergehenden Ansprüche, **dadurch gekennzeichnet, dass** in der Formel (A) x, a und c jeweils im Bereich von 0 bis 0,1 liegen.

5. Verwendung nach einem der vorhergehenden Ansprüche, **dadurch gekennzeichnet, dass** in der Formel (A) das Gewichtsprozent von I im Bezug auf das Gesamtgewicht der Calcium-Magnesium-Verbindung der Formel (A) von 0,1 bis 10 %, vorteilhaft von 0,2 bis 5 %, vorteilhafter von 0,3 bis 3 %, noch vorteilhafter von 0,4 bis 2 % variiert.

6. Verwendung nach einem der vorhergehenden Ansprüche, **dadurch gekennzeichnet, dass** in der Suspension in Wasser von Feststoffpartikeln der Massengehalt an Trockensubstanz mehr als 5 Gew.-%, vorzugsweise mehr als 10 Gew.-%, insbesondere mehr als 15 Gew.-%, noch bevorzugter mehr als 30 Gew.-% im Bezug auf das Gesamtgewicht der Suspension beträgt.

7. Bituminöses Straßenbaumaterial, das durch Mischen einer festen Mineralfraktion mit einer kationischen Bitumenemulsion, die im Wasser abbindend, erhalten wird, **dadurch gekennzeichnet, dass** der Mineralfraktion eine Suspension in Wasser von Feststoffpartikeln einer Calcium-Magnesium-Verbindung der Formel (A) zugesetzt wird, definiert nach einem der Ansprüche 1 bis 6.

8. Material nach Anspruch 7, **dadurch gekennzeichnet, dass** die kationische Bitumenemulsion durch Mischen erhalten wir, nach Gewicht im Bezug auf das Gesamtgewicht der Emulsion:
- 50 % bis 75 % eines bituminösen Bindemittels,
- 25 bis 50 % einer wässrigen Phase, enthaltend:
i.0,1 Gew.-% bis 2 Gew.-% im Bezug auf das Gesamtgewicht der Emulsion einer emulgierenden Zusammensetzung
ii.eine Menge, die ausreicht, um den pH-Wert der wässrigen Phase an einen Wert zwischen 1,5 und 8 einer Säure anzupassen
und Wasser als Vervollständigung der Formel auf 100 %.

9. Material nach Anspruch 8, **dadurch gekennzeichnet, dass** die emulgierende Zusammensetzung ein Amin umfasst, das aus den Alkylpropylenepolyaminen, den Fettaminen, den Alkyldiaminen, den Amidopolyaminen, den quaternären Ammoniumverbindungen mit Fettketten und Mischungen davon ausgewählt werden kann.

10. Material nach einem der Ansprüche 7 bis 9, **dadurch gekennzeichnet, dass** der Gehalt an Calcium-Magnesium-Verbindung, als Trockenextrakt ausgedrückt, vorteilhaft zwischen 0,01 und 0,5 Teilen pro Gewichtsprozent variiert im Bezug auf das Gewicht der trockenen festen Mineralfraktion.

11. Material nach einem der Ansprüche 7 bis 10, ausgewählt aus den kalt einzubauenden bituminösen Materialien, den Belagsemulsionen, den Kiesemulsionen und den Asphaltbetonemulsionen.

12. Verfahren zur Herstellung eines Materials nach einem der Ansprüche 7 bis 11, die folgenden Schritte umfassend
a. Zusetzen, zu einer festen Mineralfraktion; eine Suspension in Wasser von Feststoffpartikeln einer Calcium-Magnesium-Verbindung der Formel (A), definiert nach einem der Ansprüche 1 bis 6
b. Gegebenenfalls, Zusetzen von einem Wasserzusatz und/oder einem Abbindungsverzögerungsadditiv zur festen Mineralfraktion,
c. Zusetzen der festen Mineralfraktion von Schritt a) oder b) zu einer kationischen Bitumenemulsion.

13. Verfahren zum Erhalt einer Haftschicht auf einer Trägersubstanz durch Aufbringen einer kationischen Bitumenemulsion, **dadurch gekennzeichnet, dass** es die folgenden Schritte umfasst:
i. Auftragen der kationischen Bitumenemulsion, definiert nach Anspruch 8 oder 9, auf der Trägersubstanz,
ii. Auftragen eines Mittels zum Brechen,
**dadurch gekennzeichnet, dass** das Mittel zum Brechen eine Suspension in Wasser von Feststoffpartikeln einer Calcium-Magnesium-Verbindung der Formel (A) umfasst, definiert nach einem der Ansprüche 1 bis 6.

14. Verfahren nach Anspruch 13, **dadurch gekennzeichnet, dass** der Gehalt an Calcium-Magnesium-Verbindung von 0,1 bis 6 Gew.-% trocken, vorteilhaft von 0,2 bis 3 Gew.-%, der Calcium-Magnesium-Verbindung im Bezug auf das Gesamtgewicht der Emulsion variiert.

## Claims

1. Use of an aqueous suspension of solid particles of a calcium-magnesium compound of formula (A)
nCa(OH)₂.mCaCO₃.aMgO.bMg(OH)₂.cMgCO_{3.}I, wherein
n, m, a and b represent molar coefficients for the calcium-magnesium compound in suspension in the aqueous phase such that
- n+m = x represents the proportion of calcium phase present in the calcium-magnesium compound and where 0 < x ≤ 1
- a+b+c = y represents the proportion of magnesium phase present in the calcium-magnesium compound and where 0 < y ≤ 1
- x/y represents the ratio of the calcium phase to the magnesium phase
I represents all various additional compounds
as an agent regulating the breaking of a cationic bitumen emulsion.

2. Use according to claim 1, **characterised in that** in the formula (A) the x/y ratio is between 0.7 and 1.3, more particularly x/y is 1 ± 0.1.

3. Use according to claim 1 or 2, **characterised in that** in the formula (A), a equals 0.

4. Use according to any one of the preceding claims, **characterised in that** in the formula (A), x, a and c are each in the range of 0 to 0.1.

5. Use according to any one of the preceding claims, **characterised in that**, in the formula (A), the percentage by weight of I, in relation to the total weight of the calcium-magnesium compound of formula (A), varies from 0.1 to 10%, advantageously from 0.2 to 5%, more advantageously from 0.3 to 3%, and even more advantageously from 0.4 to 2%.

6. Use according to any one of the preceding claims, **characterised in that** in the aqueous suspension of solid particles the mass content of dry matter is greater than 5% by weight, preferably greater than 10% by weight, particularly greater than 15% by weight, more particularly greater than 30% by weight, in relation to the total weight of the suspension.

7. Bituminous road material obtained by mixing a solid mineral portion with a cationic binder-in-water bitumen emulsion, **characterised in that** an aqueous suspension of solid particles of a calcium-magnesium compound of formula (A) as defined in any one of claims 1 to 6 is added to the mineral portion.

8. Material according to claim 7, **characterised in that** said cationic bitumen emulsion is obtained by mixing, by weight in relation to the total weight of the emulsion:
- 50% to 75% of a bituminous binder,
- 25 to 50% of an aqueous phase containing:
i. 0.1% to 2%, by weight in relation to the total weight of the emulsion, of an emulsifying composition
ii. a quantity sufficient to adjust the pH of the aqueous phase to a value between 1.5 and 8 of an acid
and water to supplement the formula to 100%.

9. Material according to claim 8, **characterised in that** the emulsifying composition comprises an amine which may be selected from alkyl propylene polyamines, fatty amines, alkyl diamines, amidopolyamines, fatty chain quaternary ammoniums and mixtures thereof.

10. Material according to any one of claims 7 to 9, **characterised in that** the calcium-magnesium compound content, expressed in dry extract, varies advantageously from 0.01 to 0.5 parts per hundred by weight in relation to the weight of the dry solid mineral portion.

11. Material according to any one of claims 7 to 10 selected from the cold mix bituminous materials, emulsified asphalt mixes, grave emulsions, emulsified bituminous concretes.

12. Method for preparing a material according to any one of claims 7 to 11, comprising the following steps
a. adding, to a solid mineral portion, an aqueous suspension of solid particles of a calcium-magnesium compound of formula (A) as defined in any of claims 1 to 6
b. if appropriate, adding the additional water and/or a setting retarder additive to the solid mineral portion
c. adding the solid mineral portion of step a) or b) to a cationic bitumen emulsion.

13. Method for preparing a tack coat on a support by spreading a cationic bitumen emulsion, **characterised in that** it comprises the following steps:
i. application of cationic bitumen emulsion, as defined in claim 8 or 9, on the support,
ii. application of a breaking agent,
**characterised in that** the breaking agent comprises an aqueous suspension of solid particles of a calcium-magnesium compound of formula (A) as defined in any of claims 1 to 6.

14. Method according to claim 13, **characterised in that** the calcium-magnesium compound content varies from 0.1 to 6% in dry weight, advantageously from 0.2 to 3%, by weight of calcium-magnesium compound in relation to the total weight of the emulsion.
